# EUROPEAN PATENT SPECIFICATION

(11) **EP 3 045 580 B1**
(45) Date of publication and mention of the grant of the patent: **05.09.2018**
(21) Application number: 14844138.9
(22) Date of filing: 18.07.2014
(51) Int. Cl.: D06F 37/22, F16F 15/32, D06F 33/02, D06F 37/24

(54) **WASHING MACHINE AND METHOD OF CONTROLLING SAME**
WASCHMASCHINE UND VERFAHREN ZUR STEUERUNG DAVON
MACHINE À LAVER ET PROCÉDÉ DE COMMANDE ASSOCIÉ

(30) Priority: 12.09.2013 KR 20130109927
(43) Date of publication of application: 20.07.2016
(73) Proprietor: Samsung Electronics Co., Ltd., Suwon-si, Gyeonggi-do 443-742 (KR)
(72) Inventor: BAE, Il Sung, Seongnam-si Gyeonggi-do 463-701 (KR); LEE, Moo Hyung, Seoul 137-779 (KR)
(74) Representative: Gulde & Partner
(86) International application number: PCT/KR2014/006557
(87) International publication number: WO 2015/037825

(56) References cited:
- EP-A1- 2 520 700
- EP-A2- 2 441 872
- WO-A2-2011/025324
- KR-A- 20110 010 945
- KR-A- 20110 044 537
- KR-A- 20110 103 575
- KR-A- 20120 035 700
- KR-A- 20120 124 769

## Description

### [Technical Field]

The present invention relates to a washing machine and a method of controlling the same, and more particularly, to a washing machine using an active balancer and a method of controlling the same.

### [Background Art]

Generally, a washing machine is a device including a tub for accommodating water and a drum installed to be rotatable in the tub, and washes laundry by rotating the drum while accommodating the laundry in the tub. The washing machine performs a washing cycle for washing laundry, a rinse cycle for rinsing the washed laundry, and a spin-dry cycle for spin-drying the wet laundry.

Particularly, in the spin-dry cycle, the washing machine rotates the drum at high speed. In this case, when the drum is rotated at high speed, the laundry is highly concentrated at a specific position rather than uniformly distributed in the drum, and thus a load imbalance is generated. Therefore, the load imbalance generates the vibration and noise of the washing machine. In a severe case, the load imbalance may cause damage to the washing machine. EP 2 520 700 A1 describes a washing machine which improves performance of balancers, and a control method thereof. The washing machine includes a drum accommodating laundry and rotated by rotary force transmitted from a drive source, balancer housings mounted on the drum, each of the balancer housings including a disc-shaped channel formed therein, balancing modules movably disposed in the channels of the balancer housings, vibration sensors to sense unbalance applied to the drum during rotation of the drum, position sensors to sense the positions of the balancing modules, and a controller controlling movement of the balancing modules to positions to compensate for the unbalance sensed by the vibration sensors.

### [Disclosure]

### [Technical Problem]

The present invention is directed to providing a washing machine in which a balancer is positioned at a position where a load imbalance caused by laundry is offset during a spin-dry cycle.

Also, the present invention is directed to providing a washing machine in which a balancer is positioned to compensate for reduction of an imbalanced load by separating water from laundry during a spin-dry cycle.

### [Technical Solution]

One aspect of the present invention provides a washing machine including a tub, a drum provided to be rotatable in the tub to accommodate laundry, a drive motor for rotating the drum, a balancer housing which is in a ring-shape and coupled to the drum, a balancer including a weight for offsetting an unbalanced load generated by the laundry during a spin-dry cycle and a moving unit moving the weight, and provided to be movable in the balancer housing, and a control unit for performing a balancing operation of moving the balancer to a balancing position where the unbalanced load is offset and a compensating operation of moving the balancer to a compensation position where the reduction of the unbalanced load is compensated for.

The balancer may include at least two balancers.

The control unit may rotate the drum at a predetermined balancing speed and move the at least two balancers to the balancing position.

The control unit may calculate an angle between the at least two balancers positioned at the balancing position and a compensation angle compensating for the reduction of the unbalanced load based on an angle between the least two balancers.

The control unit may move the at least two balancers so that the angle between the at least two balancers is increased by the compensation angle.

The control unit may perform a spin-dry operation of rotating the drum at a predetermined spin-dry speed.

Another aspect of the present invention provides a method of controlling a washing machine, including a tub, a drum provided to be rotatable in the tub, and at least two balancers for offsetting an unbalanced load while rotating the drum, which includes rotating the drum at a predetermined balancing speed; moving the at least two balancers to a balancing position where the unbalanced load is offset, moving the at least two balancers to a compensation position where the reduction of the unbalanced load during the rotation of the drum is compensated for, and rotating the drum at a predetermined spin-dry speed.

The moving of the at least two balancers to the balancing position may include detecting the vibration of the tub; moving the at least two balancers, re-detecting the vibration of the tub, and moving the at least two balancers in a direction opposite a direction of the moving when the re-detected vibration is greater than the detected vibration.

The moving of the at least two balancers may include moving the at least two balancers in the same direction.

The moving of the at least two balancers may include moving the at least two balancers in different directions from each other.

The moving of the at least two balancers to the compensation position may include calculating a compensation angle of compensating for the reduction of the unbalanced load based on an angle between the at least two balancers positioned at the balancing positions, and moving the at least two balancers so that the angle between the at least two balancers is increased by the compensation angle.

Still another aspect of the present invention provides a washing machine including a tub, a drum provided to be rotatable in the tub to accommodate laundry, a drive motor for rotating the drum, a balancer housing which is in a ring-shape and coupled to the drum, and a balancer provided to be movable in the balancer housing to offset an unbalanced load generated by the laundry during a spin dry cycle, wherein the balancer includes a weight and a moving unit for moving the weight, and moves to a compensation position where the reduction of the unbalanced load in the balancer housing is compensated for.

The balancer may move to a balancing position where the unbalanced load in the balancer housing is offset and moves to the compensation position.

The balancer may include at least two balancers.

The at least two balancers may move so that an angle between the at least two balancers is increased for compensating for the reduction of the unbalanced load.

When the spin-dry cycle is completed, the at least two balancers may move to be positioned in opposite directions from each other with respect to a rotation axis of the drum.

### [Advantageous Effects]

According to one aspect of the present invention, the washing machine can automatically offset an imbalanced load caused by laundry during a spin-dry cycle and can reduce the vibration and noise of the washing machine during the spin-dry cycle by compensating for the reduction of the imbalanced load due to spin-drying.

### [Description of Drawings]

FIG. 1 is a view illustrating an appearance of a washing machine according to one embodiment.
FIG. 2 is a view illustrating a configuration of the washing machine according to the embodiment.
FIG. 3A is a perspective view illustrating a configuration of a drum included in the washing machine in FIG. 2.
FIG. 3B is a perspective view illustrating a configuration of a flange included in the washing machine in FIG. 2.
FIG. 4 is a view illustrating a balancing module according to one embodiment.
FIG. 5 is a view illustrating a balancer according to one embodiment.
FIG. 6 is a view illustrating a coupling configuration between the balancer and a balancer housing according to one embodiment.
FIG. 7 is a view illustrating a balancer moving unit in FIG. 5.
FIG. 8 is a view illustrating the balancer housing and a bearing according to one embodiment.
FIGS. 9 and 10 are views illustrating operations of the balancer in the balancer housing.
FIG. 11 is a block diagram illustrating a control flow of the washing machine according to one embodiment.
FIGS. 12A and 12B are flowcharts illustrating a method of performing a balancing operation and a water-removing compensating operation of the washing machine according to one embodiment.
FIGS. 13A to 14B are views illustrating an example of the balancing operation of the washing machine according to one embodiment.
FIG. 15 is a view illustrating an example of the water-removing compensating operation of the washing machine according to one embodiment.
FIG. 16 is a view illustrating a change in a rotation speed of the drum during a spin-dry operation of the washing machine according to one embodiment.
FIGS. 17A and 17B are flowcharts illustrating the spin-dry operation of the washing machine according to one embodiment.
FIGS. 18A to 18C are views illustrating an example of the water-removing compensating operation during the spin-dry operation of the washing machine according to one embodiment.

### [Modes of the Invention]

Embodiments described in this specification and configurations illustrated in drawings are only exemplary examples of the disclosed invention. It is to be understood that the invention covers various modifications that can substitute for the embodiments herein and drawings at the time of filing of this application.

Hereinafter, a washing machine according to one embodiment will be described in detail with reference to the attached drawings.

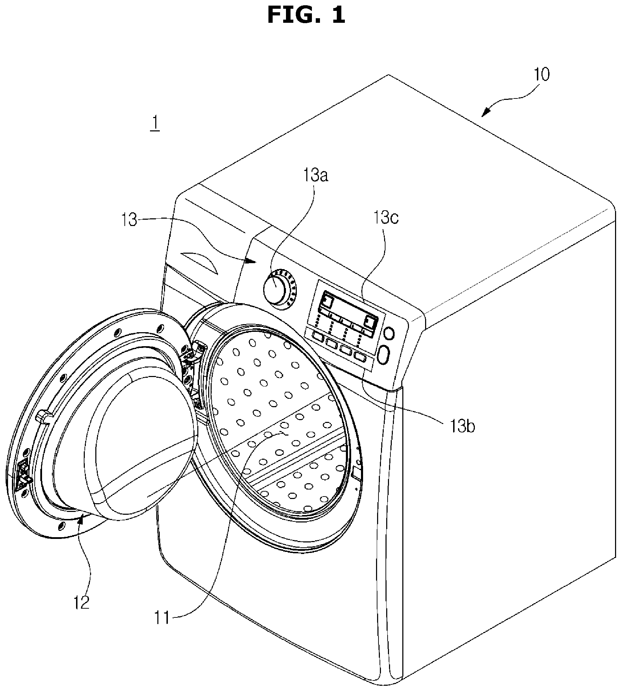

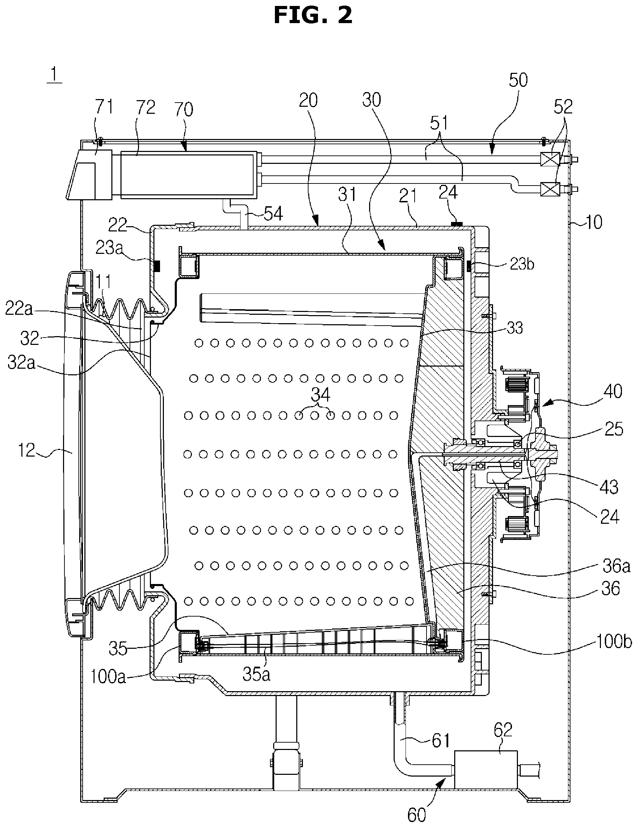

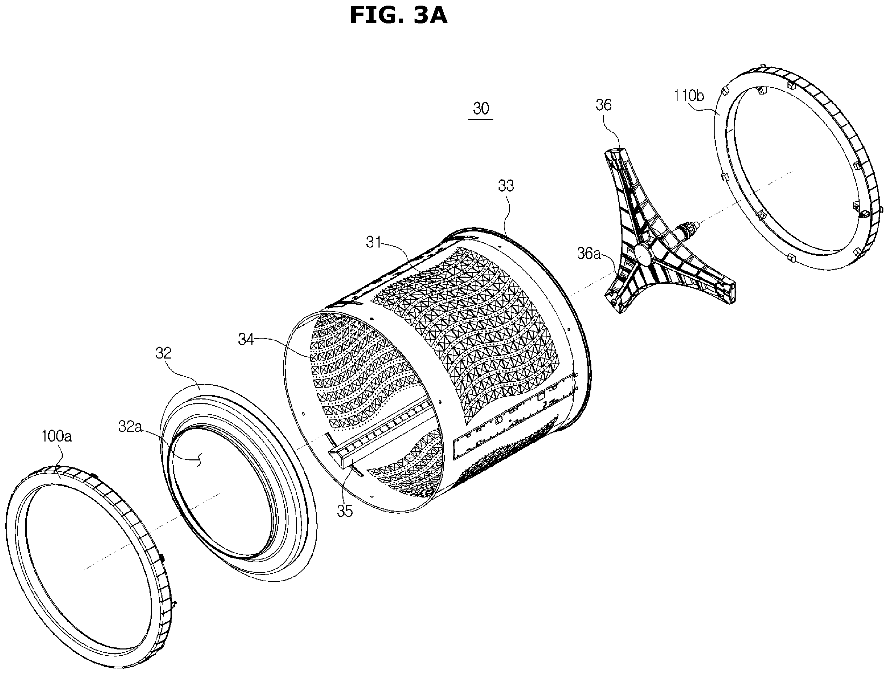

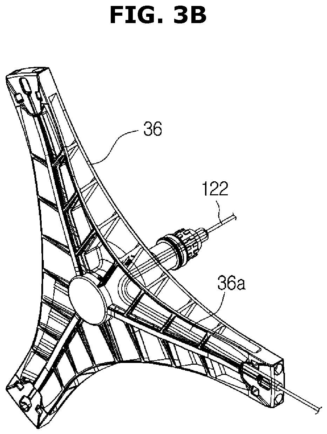

FIG. 1 is a view illustrating an appearance of a washing machine according to one embodiment, FIG. 2 is a view illustrating a configuration of the washing machine according to the embodiment, FIG. 3A is a perspective view illustrating a configuration of a drum included in the washing machine in FIG. 2, and FIG. 3B is a perspective view illustrating a configuration of a flange included in the washing machine in FIG. 2.

Referring to FIGS. 1 to 3B, a washing machine 1 includes a cabinet 10 forming an appearance, a tub 20 disposed in the cabinet 10, a drum 30 disposed to be rotatable in the tub 20, a drive motor 40 for driving the drum 30, a water supply unit 50 for supplying water to the tub 20, a drain unit 60 for discharging accommodated water in the drum, and a detergent supply unit 70 for supplying a detergent. According to circumstances, the tub 20 is integrally formed with the cabinet 10 or the tub 20 can be also omitted.

An introduction port 11 for introducing or discharging laundry is provided in the center of a front surface of the cabinet 10, and a door 12 for opening or closing the introduction port 11 is provided at the introduction port 11. Also, a control panel 13 for receiving a handling command for the washing machine 1 from a user and displaying operation information of the washing machine 1 is provided at an upper portion of the front surface of the cabinet 10.

The door 12 has one side rotatably mounted on the cabinet 10 using a hinge (not shown) and opens or closes the introduction port 11 formed at the center of the front surface of the cabinet 10.

The control panel 13 includes a dial 13a and a handling button 13b for receiving the handling command for the washing machine 1 from the user, and a display panel 13c for displaying the operation information of the washing machine 1 to the user. Specifically, the user may select any one of a plurality of predetermined washing courses using the dial 13a, and may change detailed items (a temperature of water, the number of rinses, and the strength of spin-dry, etc.) of the washing course using the handling button 13b. Also, the display panel 13c displays the operation information of the washing machine 1 such as a washing course selected by the user, the detailed items of the washing course changed by the user, washing time, and the proceeding operation, etc. The handling button 13b employs a microswitch or a membrane switch for detecting pressurization caused by the user, and a touch pad for detecting a touch operation of the user. The display panel 13c may employ a liquid crystal display (LCD) panel or a light emitting diode (LED) panel.

The tub 20 includes a tub body 21 which is provided in the cabinet 10 and has a cylindrical shape having a closed rear surface, and a tub front plate 22 disposed at the front of the tub body 21. A bearing 25 and a bearing housing 24 for rotatably fixing the drive motor 40 to be described below are provided at the rear surface of the tub body 21, and an opening 22a for introducing laundry into the drum 30 and discharging the laundry from the drum 30 is provided at the tub front plate 22. Also, the tub 20 is connected with the water supply unit 50 and the detergent supply unit 60 through a connection tube 53 provided on an upper side of the tub 20 and connected with the drain unit 60 through a drain tube 61 provided at a lower side of the tub 20.

Also, a vibration sensor 24 is provided at an outer side of the tub 20 to detect an amplitude of vibration when the tub 20 vibrates. The vibration sensor 24 may employ an acceleration sensor for detecting a change in acceleration by vibration of the tub 20.

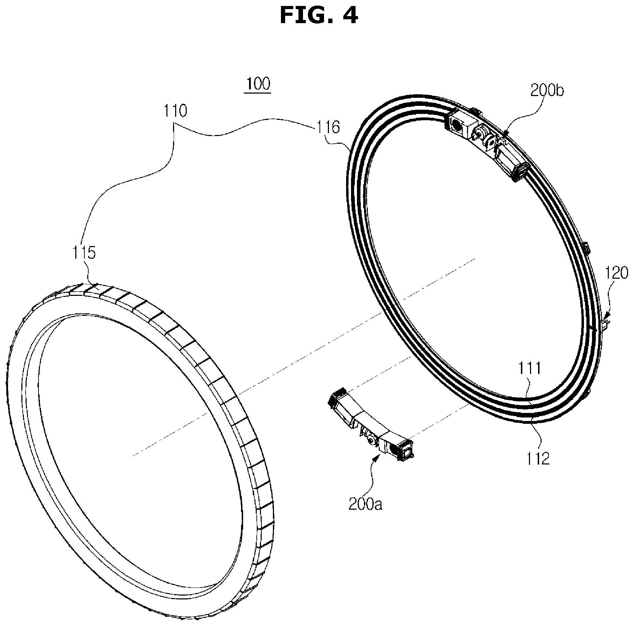

Also, position sensors 23 (23a and 23b) for detecting locations of balancers 200 (200a and 200b (see FIG. 4)) included in balancing modules 100 (100a and 100b) to be described below are provided at an inner side of the tub front plate 22 and an inner side of the rear surface of the tub body 21. The position sensors 23 will be described below in detail.

The drum 30 is provided to be rotatable in the tub 20. As shown in FIG. 3A, the drum 30 includes a drum body 31 having a cylindrical shape, a drum front plate 32 provided at a front side of the drum body 31, and a drum rear plate 33 provided at a rear side of the drum body 31.

The balancing modules 100 (100a and 100b) for offsetting an imbalance of the drum 30 are provided at the front and rear sides of the drum body 31. For example, when the drum 30 rotates, the laundry in the drum 30 is attached to an inner circumferential surface of the drum 30, and thus the center of mass of the drum 30 deviates from a rotation axis of the drum 30. A phenomenon that the center of mass of the drum 30 deviates from the rotation axis of the drum 30 refers to the imbalance. The imbalance causes vibration and noise from the washing machine 1 while the drum 30 is rotated. The balancing modules 100 (100a and 100b) located in a direction opposite the laundry with respect to the rotation axis of the drum 30 when the drum 30 rotates are provided at the front and rear sides of the drum 30 to offset the imbalance. The balancing modules 100 (100a and 100b) will be described below in detail.

Also, a through hole 34 for introducing water, accommodated in the tub 20, into the drum 30 and a lifter 35 for lifting the laundry upward are provided at the drum body 31. A first guide hole 35a through which an electrical wire 122 for supplying power to the above-described balancing modules 100 (100a and 100b) and transferring a control signal for the balancing modules 100 (100a and 100b) passes is provided in the lifter 35.

An opening 32a through which the laundry is introduced into or discharged from the drum 30 is provided in the drum front plate 132, and a flange 36 connected with the drive motor 40 which rotates the drum 30 is installed at the drum rear plate 33. Also, a second guide hole 36a through which the electrical wire for supplying power to the above described balancing modules 100 (100a and 100b) passes is provided in the flange 36.

The drive motor 40 includes a stator 41 fixed to a rear surface of the tub 120, a rotor 42 which is rotated by a magnetic interaction with the stator 41, and a rotating shaft 43 having one side connected with the rotor 42 and the other side connected with the flange 36 provided at a rear surface of the drum 30 through a rear surface of the tub 20. Also, the rotating shaft 43 is rotatably fixed to the tub 20 by the bearing 25 provided at a rear surface of the tub 20 as described above. The drive motor 40 may employ a brushless direct current (BLCD) motor or an alternation current (AC) motor that easily controls a rotation speed.

The water supply unit 50 includes: a water supply tube 51 provided on an upper side of the tub 20 and connecting between an external water supply source (not shown) and the detergent supply unit 70 to be described below; and a water supply valve 52 provided on the water supply tube 51 to open or close the water supply tube 51. Here, the water supply unit 150 supplies water to the tub 20 through the detergent supply unit 70 to be described below.

The drain unit 60 includes a drain tube 61 provided on a lower side of the tub 20 to guide discharging of the water of the tub 20 to the outside of the cabinet 10, and a drain pump 62 disposed on the drain tube 61 to discharge the water through the drain tube 61.

The detergent supply unit 70 is provided at an upper side of the tub 20 and is connected with the tub 20 through the connection tube 53. Also, the detergent supply unit 70 includes a detergent housing 72 in a box shape having an open front surface, and a detergent container 71 coupled to be attachable and detachable through the open front surface of the detergent housing 72. Also, the detergent container 71 is provided on an upper side of a front surface of the cabinet 10 so that the detergent container 71 protrudes from the housing 62 at the outside of the cabinet 10 to be opened and closed. The water supplied from the water supply unit 50 is supplied to the tub 20 through the detergent container 71, and thus is supplied to the tub 20 along with the detergent.

FIG. 4 is a view illustrating the balance module according to one embodiment. The front balancing module 100a and the rear balancing module 100b have the same structure. Therefore, hereinafter, the front balancing module 100a and the rear balancing module 100b are generally referred to as the balancing module 100 to help understanding.

As shown in FIG. 4, the balancing module 100 includes a balancer housing 110 and balancers 200 (200a and 200b) provided in the balancer housing 110. The balancers 200 include a first balancer 200a and a second balancer 200b. The first balancer 200a and the second balancer 200b are configured in the same structure. Therefore, hereinafter, the first balancer 200a and the second balancer 200b are generally referred to as the balancers 200. Also, the washing machine 100 according to the embodiment includes the first balancer 200a and the second balancer 200b, that is, two balancers 200, but is not limited thereto. The number of the balancers 200 may be less than or greater than two.

The balancer housing 110 includes a first balancer housing 115 which is in a ring shape with one open side and a second balancer housing 116 for covering the open part of the first balancer housing 115. A ring-shaped channel through which the first balancer 200a and the second balancer 200b may move is formed by coupling the first balancer housing 115 and the second balancer housing 116.

Also, a pair of electrodes 111 and 112 for supplying power to the balancers 200 are provided on an inner side of the second balancer housing 116. The pair of electrodes 111 and 112 include a positive electrode 111 and a negative electrode 112. The pair of electrodes 111 and 112 are provided in a circumferential direction of the ring-shaped second balancer housing 116. And thus, even though the balancers 200 move in the balancer housing 110, the balancers 200 may receive power or receive a control signal. The electrodes 111 and 112 of the washing machine 1 according to the embodiment are formed in the second balancer housing 116, but is not limited thereto, and may be formed at another side of the balancer housing 110.

A connector 120 for electrically connecting power with the pair of electrodes 111 and 112 is provided on an outer side surface of the balancer housing 116 of the balancer housing 110. The connector 120 is connected with the electrical wire 122 to transfer the control signal and the power supplied through the electrical wire 122 to the pair of electrodes 111 and 112.

Hereinafter, the balancers 200 (see FIG. 4) accommodated in the balancer housing 110 (see FIG. 4) will be described.

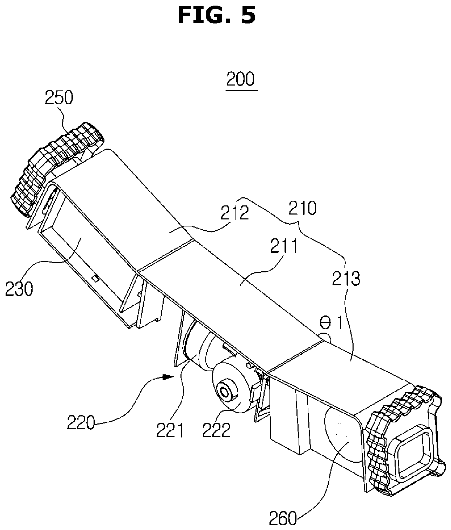

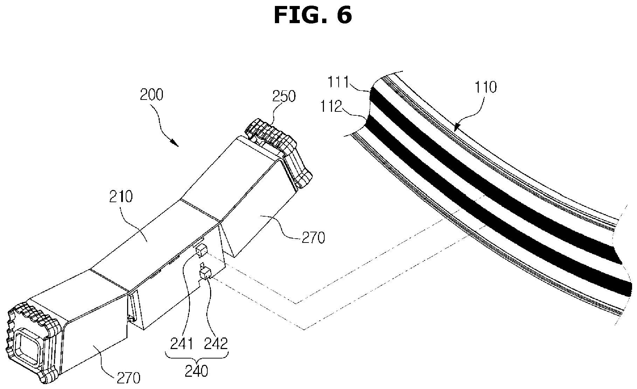

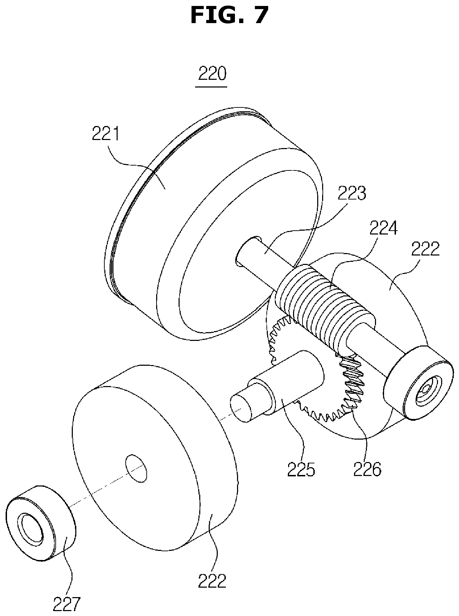

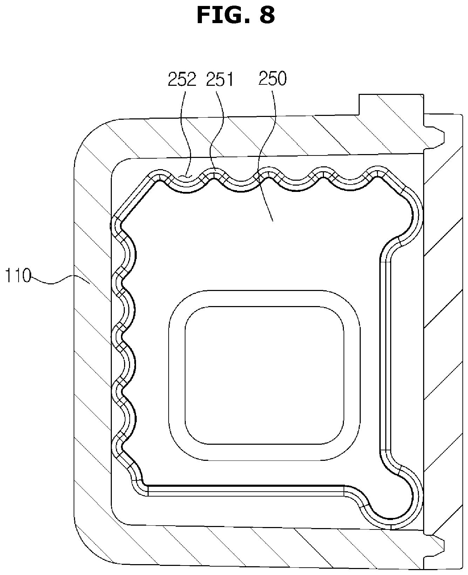

FIG. 5 is a view illustrating a balancer according to one embodiment, FIG. 6 is a view illustrating a coupling configuration between the balancer and the balancer housing according to one embodiment, FIG. 7 is a view illustrating a balancer moving unit in FIG. 5, and FIG. 8 is a view illustrating the balancer housing and a bearing according to one embodiment.

Referring to FIGS. 5 to 8, the balancer 200 includes a main plate 210 which forms a basic form.

The main plate 210 includes a center plate 211 and side plates 212 and 213 bent at both sides of the center plate 211 to have a first angle Θ1 with the center plate 211.

The center plate 211 and both side plates 212 and 213 have the predetermined first angle Θ1. Therefore, the balancers 200 may easily move in the balancer housing 110.

A balancer moving unit 220 is mounted on the center plate 211, and the balancer moving unit 220 includes wheels 222 for moving the balancer 200 and a moving motor 221 for moving the wheels 222.

Brushes 240 may be provided at the rear of the balancer moving unit 220. The brushes 240 are electrically connected with the pair of electrodes 111 and 112 of the balancer housing 110. The brushes 240 supply power or transfer the control signal to the balancer 200 by being in contact with the pair of electrodes 111 and 112 even through the balancer 200 moves.

As the pair of electrodes 111 and 112 include the positive electrode 111 and the negative electrode 112, the brushes 240 (241 and 242) may also include a positive brush 241 and a negative brush 242. The pair of brushes 241 and 242 are disposed to be in contact with the pair of electrodes 111 and 112, respectively. Also, since the brush 240 is in contact with the electrodes 111 and 112 in the rotating and vibrating drum 30 (see FIG. 2), the brush 240 may be damaged, and thus an end part in the brush 240 may be supported by an elastic material.

Gears 224 and 226 are disposed between the moving motor 221 and the wheels 222, and thus a driving force of the moving motor 221 is transferred to the wheels 222. Since the moving motor 221 and the wheels 222 are disposed to be perpendicular to each other, the first gear 224 and the second gear 226 are provided to transfer the driving force of the moving motor 221 to the wheels 222. That is, the first gear 224 and the second gear 226 may be formed as a worm gear type. The first gear 224 is provided at a driving shaft 223 of the moving motor 221, and the second gear 226 is disposed to be rotatably engaged with the first gear 224. Also, a rotating shaft 225 is provided in the center of the second gear 226, and the wheels 222 are mounted at both ends of the rotating shaft 225. Also, the first gear 224 and the second gear 226 may be formed with a helical gear. The helical gear is a gear that has a twisted gear around a wheel. The first gear 224 and the second gear 226 are formed with the helical gear to restrain the wheels 222 from freely moving even when the moving motor 221 is not operated. Therefore, even when electric power is not supplied from a power source, the balancers 200 may be fixed to a destination without moving the balancers 200.

Weights 270 are mounted to the side plates 212 and 213, respectively. The weights 270 offset the imbalance by balancing the imbalance actually generated when the laundry in the drum 30 (see FIG. 2) leans to one side, and thus the drum 30 may be rotated naturally.

A control substrate 230 on which various elements for operating the balancer moving unit 220 are mounted is installed at a front surface of one weight 270 of the two weights 270. Also, a position identifying member 260 for detecting relative positions of the pair of balancers 200 is installed at the other weight 270 of the two weights 270. The position identifying member 260 may employ a magnetic material including a permanent magnet, and a light emitting unit which emits light or a reflective plate which reflects light.

The position sensors 23 (23a and 23b (see FIG. 2)) are provided at the tub 20 (see FIG. 2) to correspond to the position identifying members 260. The position sensors 23 (see FIG. 2) include a front position sensor 23a (see FIG. 2) for detecting positions of the pair of balancers included in the front balancing module 100a (see FIG. 2), and a rear position sensor 23b (see FIG. 2) for detecting positions of the pair of balancers included in the rear balancing module 100b (see FIG. 2).

The position sensors 23 (see FIG. 2) are configured to determine where the balancers 200 are currently positioned by detecting positions of the balancers 200. The position sensors 23 may be hole sensors, infrared sensors, or optical fiber sensors. When the position sensors 23 are the hole sensors, the position identifying member 260 may be the magnetic material, and when the position sensors 23 are the infrared sensors, the position identifying member 260 may be the light emitting unit which emits infrared light. Also, when the position sensors 23 are the optical fiber sensors, the position identifying member 260 may be the reflective plates.

Bearings 250 are coupled to end parts of side plates 212 and 213, respectively.

The bearings 250 prevent the balancers 200 from colliding with an inner side surface of the balancer housing 110. Also, the bearings 250 allow the balancers 200 to be accurately fixed to a position at which the imbalance is offset by restraining the balancers 200 from freely moving in the balancer housing 110. The bearing 250 will be described below.

The bearing, as shown in FIG. 8, is formed to be in contact with an inner surface of the balancer housing 110.

The bearings 250, as a friction bearing, are in contact with the inner surface of the balancer housing 110 to limit the movement of the balancers 200 to a predetermined range and prevent the balancer 200 from colliding with the inner side surface of the balancer housing 110.

A surface of the bearing 250 includes a protruding contact part 251, and a concave part 252 depressed inward from the contact part 251. That is, the side surface of the bearing 250 is formed to be curved.

Thus, since foreign materials in the balancer housing 110 pass through between the concave parts 252 or gather in the concave part 252, the movement of the balancers 200 is prevented from being interrupted due to the foreign materials.

Also, since a size of the contact part 251 is controlled, the balancers 200 are prevented from colliding with a side surface of the balancer housing 110, and the brushes 240 may come in contact with the electrodes 111 and 112 of the balancer housing 110 while maintaining a predetermined distance.

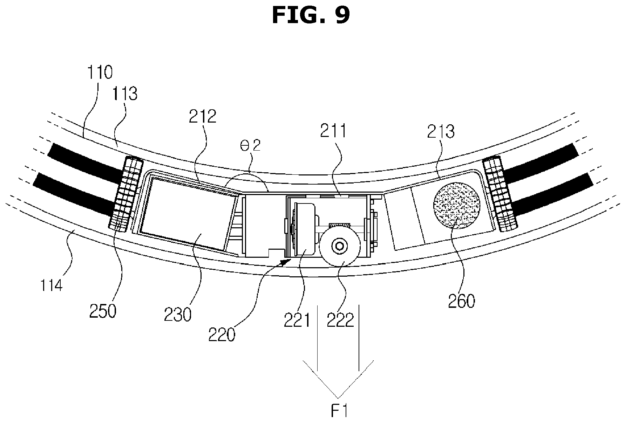

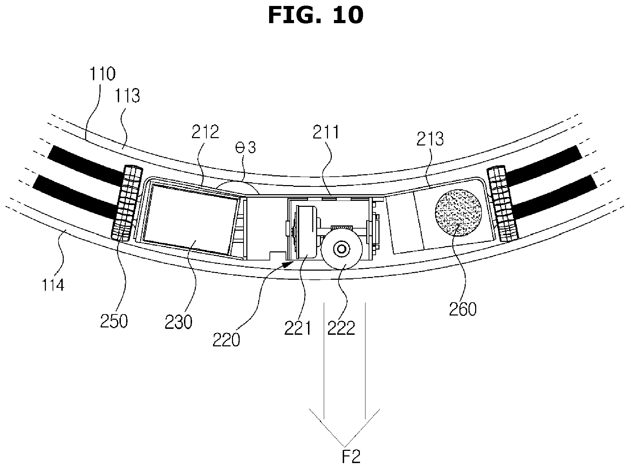

FIGS. 9 and 10 are view illustrating an operation of the balancer in the balancer housing.

Specifically, FIG. 9 is a view illustrating a state of the balancers 200 when the drum 30 (see FIG. 2) rotates at low speed or stops.

As shown in FIG. 9, the center plate 211 and the side plates 212 and 213 of the main plate 210 maintain a second angle Θ2, which is a greater angle than the first angle Θ1, in the balancer housing 110, and thus a restoring force in which the center plate 211 and the side plates 212 and 213 are restored to the first angle Θ1 is generated.

The bearings 250 provided at end parts of the side plates 212 and 213 are in contact with a first surface 113 formed on a radial inner side of the balancer housing 110 by the restoring force of the side plates 212 and 213 and the center plate 211, and the wheels 222 provided in the center plate 211 are in contact with a second surface 114 formed at a radial outer side of the balancer housing 110.

Also, since a small force F1 by the restoring force between the side plates 212 and 213 and the center plate 211 is applied to the center plate 211, the wheels 222 may be rotated and the balancers 200 may be moved.

That is, when the drum 20 (see FIG. 2) stops or rotates at low speed, the balancers 200 may move along the balancer housing 110.

FIG. 10 is a view illustrating a state of the balancer 200 when the drum 20 (see FIG. 2) is rotated at high speed.

As shown in FIG. 10, both of the bearings 250 and the wheels 222 are in contact with the second surface 114 while the plates 212 and 213 are spread by a centrifugal force, and a third angle Θ3 formed by the center plate 211 and the side plates 212 and 213 becomes greater than the second angle Θ2 at the time of stopping.

As the third angle Θ3, which is an angle between the center plate 211 and the side plates 212 and 213 when the drum 20 (see FIG. 2) is rotated at high speed, is greater than the second angle Θ2, which is an angle between the center plate 211 and the side plates 212 and 213 when the drum 20 (see FIG. 2) is stopped or rotated at low speed, a centrifugal force F2 is applied to the balancers 200 rather than the force F1 generated by the restoring force between the center plate 211 and the side plates 212 and 213.

According to the centrifugal force F2, a large frictional force is generated between the wheels 222 and the second surface 114. When the frictional force is greater than torque of the moving motor 221 driving the wheels 222, the balancers 200 may not be moved any more.

In the other words, when the drum 20 (see FIG. 2) is rotated at high speed, the balancers 200 may not be moved in the balancer housing 110. When the drum 20 (see FIG. 2) is rotated at a speed of about 440 rpm or greater, the balancers 200 of the washing machine 1 according to the embodiment may not be moved.

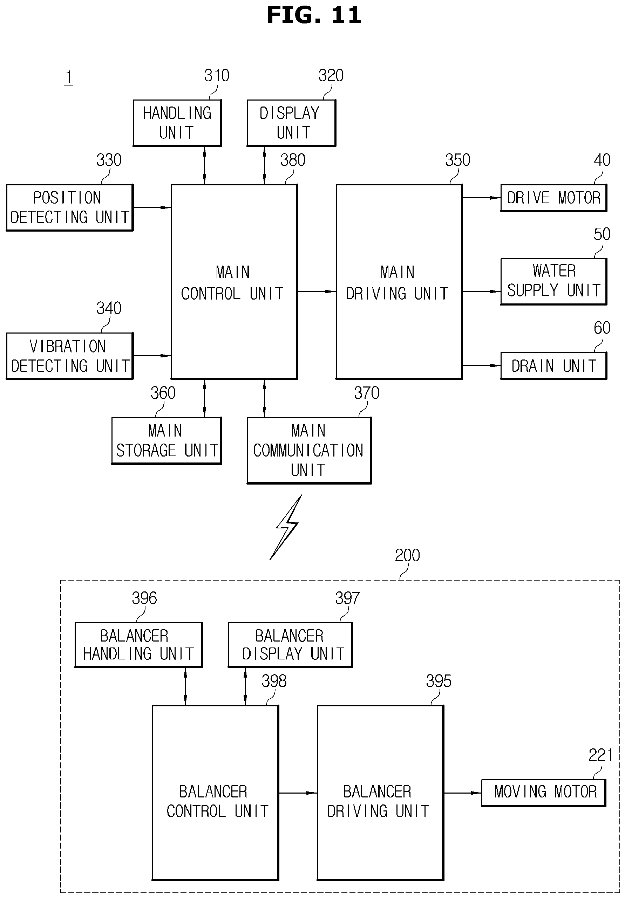

FIG. 11 is a block diagram illustrating a control flow of the washing machine according to one embodiment.

Referring to FIG. 11, the washing machine 1 includes a handling unit 310, a display unit 320, a position detecting unit 330, a vibration detecting unit 340, a main driving unit 350, a main storage unit 360, a main communication unit 370, and a main control unit 380 along with the drive motor 40, the water supply unit 50, the drain unit 60, and the balancers 200 already described. Also, the balancer 200 includes a balancer driving unit 395, a balancer storage unit 396, a balancer communication unit 397, and a balancer control unit 398 along with the moving motor 221.

The handling unit 310 is provided on the control panel 13 (see FIG. 1) and includes the dial 13a (see FIG. 1) for receiving a handling command for the washing machine 1 from a user and the handling button 13b (see FIG. 1). The display unit 320 is provided on the control panel 13 (see FIG. 1) and includes the display panel 13c for displaying operation information.

The position detecting unit 330 includes the position identifying members 260 (see FIG. 5) for detecting relative positions of the pair of balancers 200 (see FIG. 5) and the position sensors 23 (23a and 23b) (see FIG. 2).

The vibration detecting unit 340 includes the vibration sensor 24 which detects a magnitude of the vibration of the tub 20 (see FIG. 2) due to the vibration.

The main driving unit 350 operates the drive motor 40, the water supply unit 50, and the drain unit 60 according to the control signal of the main control unit 380 to be described below. Particularly, the main driving unit 350 may include an inverter for controlling a rotation speed and a rotation direction of the drive motor 40.

The main storage unit 360 may include not only a non-volatile memory (not shown), such as a magnetic disc and a solid state disk, that permanently store a program and data for controlling an operation of the washing machine 1, but also a volatile memory (not shown), such as a dynamic random access memory (DRAM) and a static random access memory (SRAM), that temporarily store temporary data generated in a process of controlling an operation of the washing machine 1.

The main communication unit 370 may include a wireless communication module (not shown) for performing wireless communication with the balancers 200 using a wireless communication method such as wireless fidelity (Wi-Fi), Bluetooth, Zigbee, near field communication (NFC), or a wired communication module (not shown) for performing wired communication with the balancers 200 through an electrical wire 122 (FIG. 3B) which provides power and a control signal for the balancers 200.

The main control unit 380 performs washing, rinsing, and spin-drying, by controlling the drive motor 40, the water supply unit 50, and the drain unit 60 based on a handling command of a user input through the handling unit 310. Particularly, the main control unit 380 controls movements of the balancers 200 based on the positions of the balancers 200 detected by the position detecting unit 330 and the vibration of the tub 20 (see FIG. 2) detected by the vibration detecting unit 340.

The balancer driving unit 395 operates the moving motor 221 to move the balancers 200 according to a control signal of the balancer control unit 398 to be described below.

The balancer storage unit 396 may include not only a non-volatile memory (not shown), such as a magnetic disc and a solid state disk, that permanently stores a program and data for controlling operations of the balancers 200, but also a volatile memory (not shown), such as a DRAM and an SRAM, that temporarily stores temporary data generated in a process of controlling the operations of the balancers 200.

The balancer communication unit 397 may include a wireless communication module (not shown) for performing wireless communication with the washing machine 1 using a wireless communication method, such as Wi-Fi, Bluetooth, Zigbee, and NFC, or a wire communication module (not shown) for performing wire communication with the washing machine 1 through an electrical wire 122 (see FIG. 3B) which provides the power and the control signal for the balancers 200.

The balancer control unit 398 generates a control signal for controlling an operation of the moving motor 221 according to a control signal of the main control unit 380 received through the balancer communication unit 397 and transfers the generated control signal to the balancer driving unit 395.

Hereinbefore, the configuration of the washing machine 1 according to one embodiment has been described.

Hereinafter, the operation of the washing machine 1 according to one embodiment, i.e., particularly, the operation of the balancer 200, will be described.

A general operation of the washing machine 1 will be first described with reference to FIG. 2 described above. The washing machine 1 performs a washing cycle for separating foreign materials attached to the laundry by rotating the drum 30 after supplying water and detergent to the tub 20, a rinse cycle for removing the foreign materials separated from the laundry from the detergent by rotating the drum 30 after supplying a rinse agent to the tub 20, and a spin-dry cycle for separating the water from the laundry by rotating the drum 30 at high speed. Also, the washing machine 1 performs a water supply operation of supplying the water to the tub 20 before the washing cycle and the rinse cycle, and performs an intermediate spin-dry operation after the washing cycle and the rinsing cycle are completed.

At the time of the washing cycle and rinse cycle, the washing machine 100 rotates the drum 130 (see FIG. 3) at a speed of 45 to 60 rpm in a clockwise direction and a counterclockwise direction. Specifically, the washing machine 100 repeats stopping the drum 30 for 4 to 5 seconds (off-time) after rotating the drum 30 for about 20 seconds (on-time) in a clockwise direction, and stopping the drum 30 for 4 to 5 seconds (off-time) after rotating the drum 30 for about 20 seconds (on-time) in a counterclockwise direction.

At the time of the spin-dry cycle, the washing machine 100 separates the water absorbed in the laundry by the centrifugal force by rotating the drum 30 in any one direction of the clockwise or counterclockwise direction at a speed of hundreds to thousands of rpms and discharges the water to the outside of the drum 30 that is the tub 20.

Particularly, at the time of the spin-dry cycle, as described above, since the laundry is attached to an inner surface of the drum 30 to generate the imbalance, the balancing operation of offsetting the imbalance is performed. Particularly, the washing machine 1 according to one embodiment includes the balancers 200 (see FIG. 5) which change their positions by themselves according to the vibration of the tub 20, and the balancers 200 (see FIG. 5) move to optimal positions to offset the imbalance.

Also, after performing the balancing operation, the washing machine 1 performs a water-removing compensating operation to compensate for the water-removing phenomenon in which a weight of the laundry, that is a magnitude of the imbalance, is reduced when the water is separated from the laundry during the spin-dry cycle. As described below, the washing machine 1 according to one embodiment performs a spin-dry operation by increasing the rotation speed of the drum 30 up to a spin-dry speed (approximately hundreds to thousands of rpms) after the balancing operation when the drum 30 is rotated at a speed of about 400 rpm. At this time, since the balancing action is performed regardless of the water-removing phenomenon during the spin-dry action, an imbalance due to the balancers 200 is increased as the spin-dry proceeds. To compensate for the water-removing phenomenon, the washing machine 1 estimates the amount of the water separated from the laundry before the spin-dry operation and performs the water-removing compensating operation according to the amount of the estimated water.

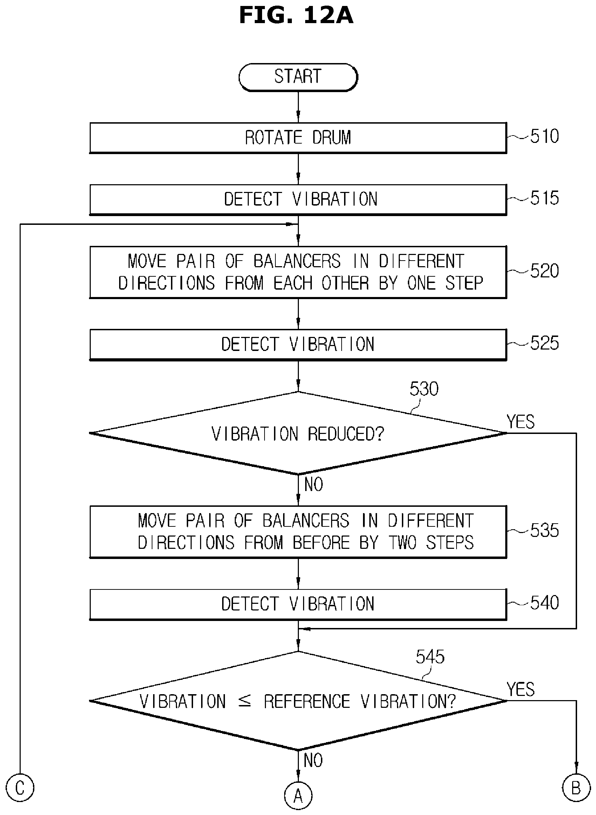

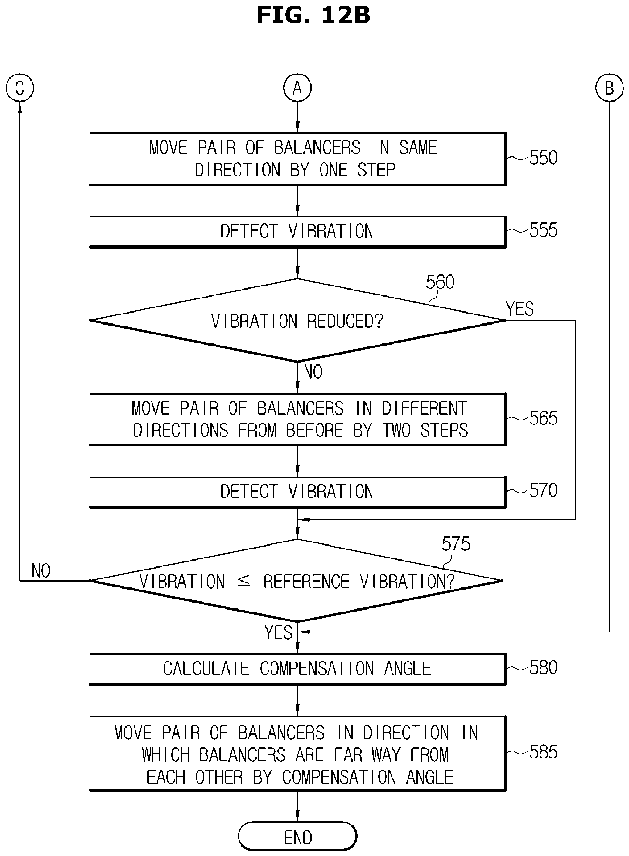

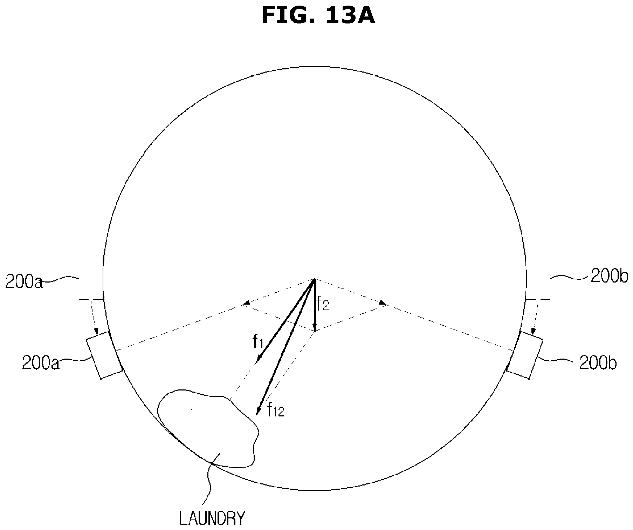

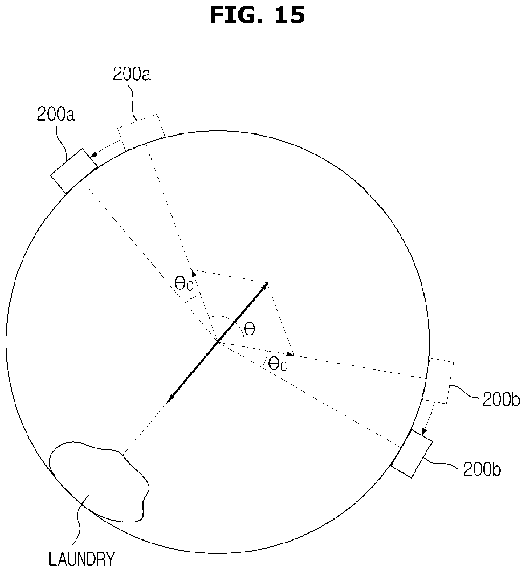

FIGS. 12A and 12B are flowcharts illustrating a method in which the washing machine according to one embodiment performs a balancing operation and a water-removing compensating operation, and FIGS. 13A to 14B are views illustrating an example of the balancing operation of the washing machine according to one embodiment. Also, FIG. 15 is a view illustrating an example of the water-removing compensating operation of the washing machine according to one embodiment.

Referring to FIGS. 2, 5, 12A, and 12B, the balancing operation and the water-removing compensating operation of the washing machine 1 will be described. Since operations of the front balancing module 100a and the rear balancing module 100b are the same, the front balancing module 100a will be described as an example.

As shown in FIG. 5, the balancers 200 include the first balancer 200a and the second balancer 200b. The first balancer 200a and the second balancer 200b may be moved while the drum 30 is rotated. Also, when the washing machine 1 is stopped or performs operations other than the spin-dry cycle, the first balancer 200a and the second balancer 200b are positioned in the balancer housing 110 in the opposite directions to each other so that an imbalance is not generated by the first balancer 200a and the second balancer 200b. That is, the first balancer 200a and the second balancer 200b are disposed to have an angle of 180° or less with respect to the rotation axis of the drum 30.

Since the balancer 200 is rotated along with the drum 30, a relative position between the balancer 200a and the second balancer 200b is not changed. Since the laundry is attached to an inner circumferential surface of the drum 30 when the drum 30 is rotated, the position of the laundry is also maintained without a change in position. Therefore, a coordinate system in which a straight line in which the first balancer 200a and the second balancer 200b are initially positioned becomes an x-axis and a straight line perpendicular to the x-axis becomes a y-axis may be defined. Of course, the coordinate system is a rotary coordinate system which rotates with the drum 30. Hereinafter, the balancing operation will be described based on the rotary coordinate system which rotates with the drum 30.

The balancing operation of the washing machine 1 is operated in a trial and error method. The balancing operation of the washing machine 1 includes positioning the balancers 200 so that a centrifugal force having the same magnitude as the laundry is generated in a direction opposite the centrifugal force by the laundry, and in this case, the washing machine 1 does not know the position of the laundry. So, the balancers 200 are moved in a direction in which vibration of the tub 20 is reduced by repeatedly moving the balancers 200 in a random direction and detecting the vibration of the tub 20. Specifically, the washing machine 1 moves the first balancer 200a and the second balancer 200b and then, when the vibration is reduced as compared to the previous vibration of the tub 20, maintains the positions of the first balancer 200a and the second balancer 200b and, when the vibration is increased, moves the first balancer 200a and the second balancer 200b in opposite directions.

Also, the balancing operation is divided into a closing operation in which the first balancer 200a and the second balancer 200b are moved in the different directions from each other to change an angle between the first balancer 200a and the second balancer 200b with respect to the rotation axis of the drum 30 and a shifting operation in which the first balancer 200a and the second balancer 200b are moved in the same direction to change a direction of the center line between the first balancer 200a and the second balancer 200b. A magnitude of a resultant force due to the centrifugal forces of the first balancer 200a and the second balancer 200b is changed by the closing operation, and the direction of the resultant force due to the centrifugal forces of the first balancer 200a and the second balancer 200b is changed by the shifting operation.

In the balancing operation of the washing machine according to one embodiment, the closing operation and the shifting operation are repeated alternately.

During the spin-dry cycle, the washing machine 1 rotates the drum 30 (510). At this time, the drum 30 is rotated at a rotation speed at which the balancers 200 (200a and 200b) can be moved, and the washing machine 1 according to one embodiment rotates the drum 30 at a speed of about 400 rpm.

While the drum 30 is rotated, the washing machine 1 detects the vibration of the tub 20 through the vibration sensor 24 (515). While the drum 30 is rotated, the wet laundry in the drum 30 is attached to the inner circumferential surface of the drum 30 to generate an imbalance, the imbalance causes the tub 20 to vibrate along with the drum 30. The washing machine 1 detects the amplitude of the vibration of the tub 20.

After the amplitude of the vibration of the tub 20 is initially detected, the following closing operation is performed.

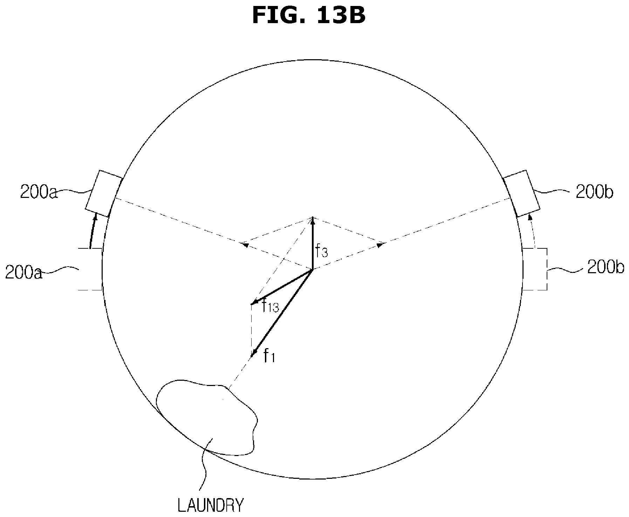

The washing machine 1 moves the pair of balancers 200a and 200b in the different directions from each other by one step. That is, the first balancer 200a and the second balancer 200b, as shown in FIGS. 13A and 13B, are moved in the different directions from each other. Specifically, as shown in FIG. 13A, when the first balancer 200a is moved in the counterclockwise direction, the second balancer 200b is moved in the clockwise direction. As shown in FIG. 13B, when the first balancer 200a is moved in the clockwise direction, the second balancer 200b is moved in the counterclockwise direction. Consequently, the first balancer 200a and the second balancer 200b, as shown in FIGS. 13A and 13B, gather at one side of the drum 30. That is, when the first balancer 200a is moved in the counterclockwise direction and the second balancer 200b is moved in the clockwise direction, as shown in FIG. 13A, the balancers 200 converge to a lower side of the drum 30, and the centrifugal forces of the first balancer 200a and the second balancer 200b are combined to generate a force f2 in a -y-axis direction. Also, when the first balancer 200a is moved in a clockwise direction, and the second balancer 200b is moved in a counterclockwise direction, as shown in FIG. 13B, the balancers 200 converge to an upper side of the drum 30, and the centrifugal forces of the first balancer 200a and the second balancer 200b are combined to generate a force f3 in +y-axis direction.

Here, one step refers to a basic unit in which the balancers 200 are moved.

Afterward, the washing machine 1 detects the vibration of the tub 20 through the vibration sensor 24 (525).

Then, the washing machine 1 determines whether the amplitude of vibration of the tub 20 is reduced as compared to before (530). As the balancers 200 are moved, the vibration of the tub 20 may be reduced, or rather, the vibration of the tub 20 may be increased. As shown in FIG. 13A, when the balancers 200 converge to the lower side of the drum 30, a resultant force f12 of the force f2 and the centrifugal force f1 of the laundry becomes greater than before. Therefore, when the balancers 200 converge to the lower side of the drum 30, the imbalance is further increased, and thus the vibration of the tub 20 is increased. On the contrary, as shown in FIG. 13A, when the balancers 200 converge to the upper side of the drum 30, a resultant force f13 of the force f3 and the centrifugal force f1 of the laundry becomes smaller than before. Therefore, when the balancers 200 converge to the upper side of the drum 30, the imbalance is reduced, and thus the vibration of the tub 20 is reduced.

When the vibration of the tub 20 is not reduced, that is, the vibration of the tub 20 is increased (no in 530), the washing machine 1 moves the pair of balancers 200a and 200b in opposite directions to as before by two steps (535). In other words, the washing machine 1 moves the balancers 200a and 200b in the opposite direction to the direction in which the first balancer 200a and the second balancer 200b are moved in step 520 by two steps. For example, as shown in FIG. 13B, when the vibration of the tub 20 is increased more by moving the first balancer 200a in the counterclockwise direction and the second balance 200b in the clockwise direction, the washing machine 1 moves the first balancer 200a in the clockwise direction and moves the second balancer 200b in the counterclockwise direction, and thus the vibration of the tub 20 is reduced.

Afterward, the washing machine 1 detects the vibration of the tub 20 through the vibration sensor 24 (540).

Then, the washing machine 1 determines whether the amplitude of the vibration of the tub 20 is equal to or less than an amplitude of a reference vibration (545), that is, determines whether the amplitude of the vibration of the tub 20 detected in step 525 or the vibration of the tub 20 detected in step 540 is equal to or less than the amplitude of the reference vibration. Here, the amplitude of the reference vibration refers to the amplitude of the vibration of the tub 20 in which noise due to the vibration of the tub 20 is less than or equal to an appropriate value. In other words, when the amplitude of the vibration of the tub 20 is less than or equal to the amplitude of the reference vibration, the imbalance is sufficiently compensated for by the balancers 200.

In step 530 described above, when the vibration of the tub 20 is reduced (yes in 530), the washing machine 1 determines whether the amplitude of the vibration of the tub 20 is less than or equal to the amplitude of the reference vibration without additionally moving the balancers 200 (545).

When the amplitude of the vibration of the tub 20 is less than or equal to the amplitude of the reference vibration (yes in 535), the water-removing compensating operation to be described below is performed, and when the amplitude of the vibration of the tub 20 is greater than the amplitude of the reference vibration (no in 535), the following shifting operation is performed.

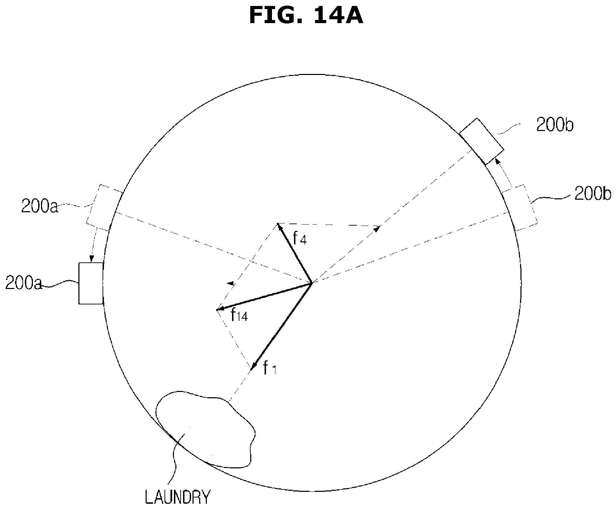

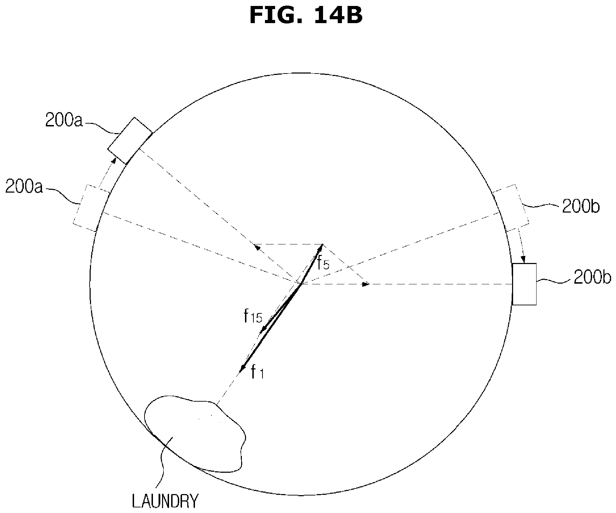

The washing machine 1 moves the pair of balancers 200a and 200b in the same direction by one step (550). That is, as shown in FIG. 14A, both of the first balancer 200a and the second balancer 200b are moved in the same direction. Specifically, as shown in FIG. 14A, both of the first balancer 200a and the second balancer 200b are moved in the counterclockwise direction, or as shown in FIG. 14B, both of the first balancer 200a and the second balancer 200b are moved in the clockwise direction. Consequently, the first balancer 200a and the second balancer 200b are closer to or further away from the laundry. That is, when both of the first balancer 200a and the second balancer 200b are moved in the counterclockwise direction, as shown in FIG. 14A, a force f4 due to the centrifugal forces of the first balancer 200a and the second balancer 200b is rotated in the counterclockwise direction. Also, when both of the first balancer 200a and the second balancer 200b are moved in the clockwise direction, as shown in FIG. 14B, a force f5 due to the centrifugal forces of the first balancer 200a and the second balancer 200b is rotated in the clockwise direction.

Afterward, the washing machine 1 detects the vibration of the tub 20 through the vibration sensor 24 (555).

Then, the washing machine 1 determines whether the amplitude of the vibration of the tub 20 is reduced as compared to before (560). As shown in FIG. 14A, when the balancers 200 are moved in the counterclockwise direction, the force f4 is rotated in the counterclockwise direction, and thus an angle between the force f4 and the centrifugal force f1 of the laundry is reduced and a resultant force f14 of the force f4 and the centrifugal force f1 of the laundry is increased as compared to before. That is, the imbalance is increased, and thus the vibration of the tub 20 is also increased as compared to before. On the contrary, as shown in FIG. 14B, when the balancers 200 are moved in the clockwise direction, the force f5 is rotated in the clockwise direction, and thus an angle between the force f5 and the centrifugal force f1 of the laundry is increased, and a resultant force f15 of the force f5 and the centrifugal force f1 of the laundry is reduced as compared to before. Therefore, the imbalance is reduced, and thus the vibration of the tub 20 is also reduced as compared to before.

When the vibration of tub 20 is not reduced, that is, the vibration of tub 20 is increased (no in 560), the washing machine 1 moves the pair of balancers 200a and 200b in the opposite direction from before by two steps (565). In other words, the washing machine 1 moves the first balancer 200a and the second balancer 200b in the opposite direction to a direction in which the first balancer 200a and the second balancer 200b are moved in step 550 by two steps. For example, as shown FIG .14A, when the first balancer 200a and the second balancer 200b are moved in the counterclockwise direction and the vibration of the tub 20 is further increased, the washing machine 1 moves the first balancer 200a and the second balancer 200b in the clockwise direction to reduce the vibration of the tub 20.

Afterward, the washing machine 1 detects the vibration of the tub 20 through the vibration sensor 24 (570).

Subsequently, the washing machine 1 determines whether the vibration of the tub 20 is equal to or less than the amplitude of the reference vibration (575). That is, it is determined whether the amplitude of the vibration of the tub 20 detected in step 555 or the vibration of the tub 20 detected in step 570 is equal to or less than the amplitude of the reference vibration.

When the amplitude of the vibration of the tub 20 is greater than the amplitude of the reference vibration (no of 535), the closing operation is performed again.

The washing machine 1 alternately repeats the closing operation and the shifting operation until the amplitude of the vibration of the tub 20 becomes equal to or less than the amplitude of the reference vibration.

When the amplitude of the vibration of the tub 20 is equal to or less than the amplitude of the reference vibration (yes in 535), the following water-removing compensating operation is performed. When the amplitude of the vibration of the tub 20 is equal to or less than the amplitude of the reference vibration, as shown in FIG. 15, a resultant force of the centrifugal force of the laundry, the centrifugal force of the first balancer 200a, and the centrifugal force of the second balancer 200b converges to 0. That is, the imbalance is offset.

First, a compensation angle compensating for water-removing in the spin-dry operation is calculated (580). A method of calculating the compensation angle will be described below in detail.

Afterward, the washing machine 1 is moved according to the compensation angle so that the pair of balancers 200a and 200b are further away from each other (585). That is, the balancers 200a and 200b are moved so that an angle between the pair of balancers 200a and 200b with respect to the rotation axis of the drum 30 is increased. For example, as shown in FIG. 15, the first balancer 200a is moved in the counterclockwise direction by a compensation angle Θc, and the second balancer 200b is moved in the clockwise direction by the compensation angle Θc.

After the water-removing compensating operation, as shown in FIG. 15, the angle between the first balancer 200a and the second balancer 200b is increased based on the rotation axis of the drum 30, and a resultant force of the centrifugal force of the first balancer 200a and the centrifugal force of the second balancer 200b is reduced. Consequently, a small imbalance is generated due to the laundry. However, the imbalance disappears by the water-removing in the spin-dry operation, and the vibration of the tub 20 is reduced as the spin-dry proceeds.

Hereinbefore, the balancing operation and the water-removing compensating operation in the spin-dry operation have been described.

Hereinafter, a method of calculating the compensation angle of the water-removing compensating operation in the spin-dry operation will be described.

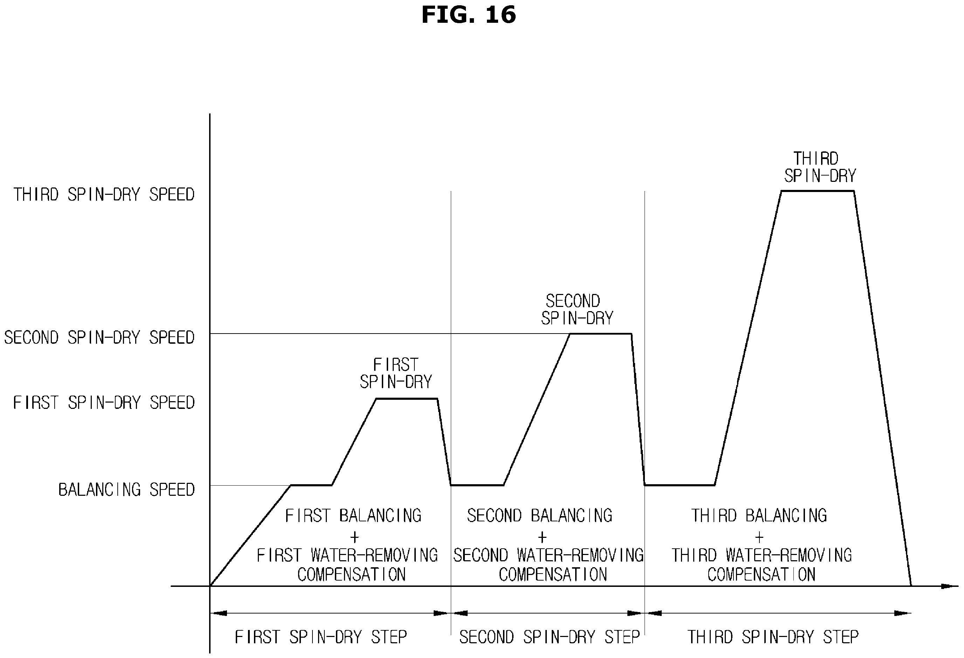

FIG. 16 is a view illustrating a change in a rotation speed of the drum during a spin-dry operation of the washing machine according to one embodiment.

Referring to FIG. 16, a spin-dry cycle of the washing machine 1 is largely divided into a first spin-dry step, a second spin-dry step, and a third spin-dry step.

In the first spin-dry step, the washing machine 1 increases a rotation speed of the drum 30 up to a balancing speed (approximately 400 rpm). When the rotation speed of the drum 30 reaches the balancing speed, the washing machine 1 performs a first balancing operation and a first water-removing compensating operation. Subsequently, the washing machine 1 increases the rotation speed of the drum 30 up to a first spin-dry speed (approximately 600 rpm). When the rotation speed of the drum 30 reaches the first spin-dry speed, the rotation speed of the drum 30 is maintained at the first spin-dry speed for a predetermined time, and thus the first spin-dry operation is performed. Subsequently, the washing machine 1 finishes the first spin-dry step by reducing the rotation speed of the drum down to the balancing speed.

In the second spin-dry step after the first spin-dry, the washing machine 1 performs the second balancing operation and the second water-removing compensating operation when the rotation speed of the drum 30 reaches the balancing speed. Subsequently, the washing machine 1 increases the rotation speed of the drum 30 up to the second spin-dry speed (approximately 850 rpm). When the rotation speed of the drum 30 reaches the second spin-dry speed, the rotation speed of the drum 30 is maintained at the second spin-dry speed for a predetermined time, and thus the second spin-dry operation is performed. Subsequently, the washing machine 1 finishes the second spin-dry step by reducing the speed of rotation of the drum 30 down to the balancing speed.

In the third spin-dry step after the second spin-dry step, the washing machine 1 performs the third water-removing compensating operation and the third balancing operation when the rotation speed of the drum 30 reaches the balancing speed. Subsequently, the washing machine 1 increases the rotation speed of the drum 30 up to the third spin-dry speed (approximately 1400 rpm). When the rotation speed of the drum 30 reaches the third spin-dry speed, the rotation speed of the drum 30 is maintained at the third spin-dry speed for a predetermined time, and thus the third spin-dry operation is performed. Subsequently, the washing machine 1 finishes the spin-dry cycle along with the third spin-dry cycle by reducing the rotation speed of the drum 30 down to the balancing speed.

The washing machine 1 performs the spin-dry step three times during the spin-dry cycle to accurately calculate the compensation angle in the third water-removing compensating operation. An amount of removed water in the spin-dry operation varies depending on various factors such as an amount of wet laundry and a material of the laundry. That is, the amount of removed water may not be entirely estimated based on the amount of the wet laundry.

For such a reason, the washing machine 1 determines the tendency of the water-removing by performing the first spin-dry operation and the second spin-dry operation with the first spin-dry speed (600 rpm) and the second spin-dry speed (850 rpm) that are relatively low speeds, and the third spin-dry operation is performed based on the tendency at the third spin-dry speed (1400 rpm) that is the final high speed.

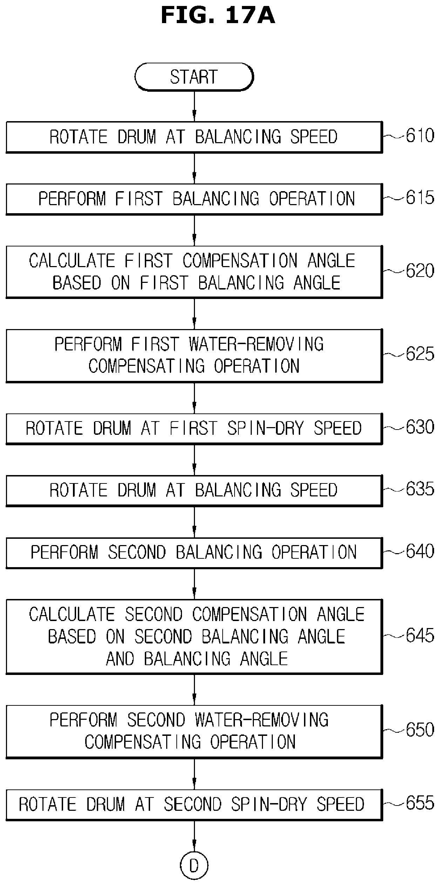

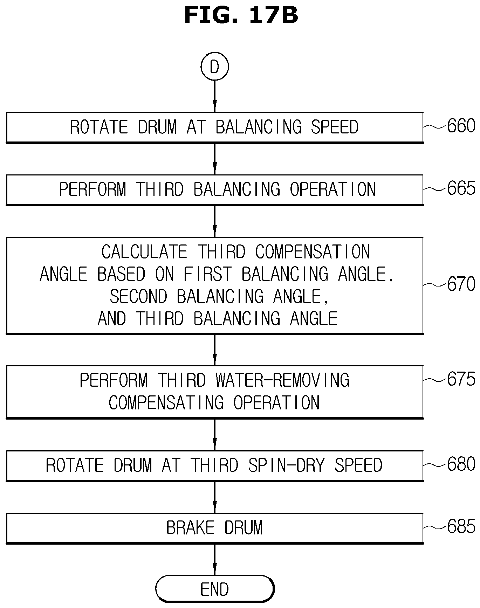

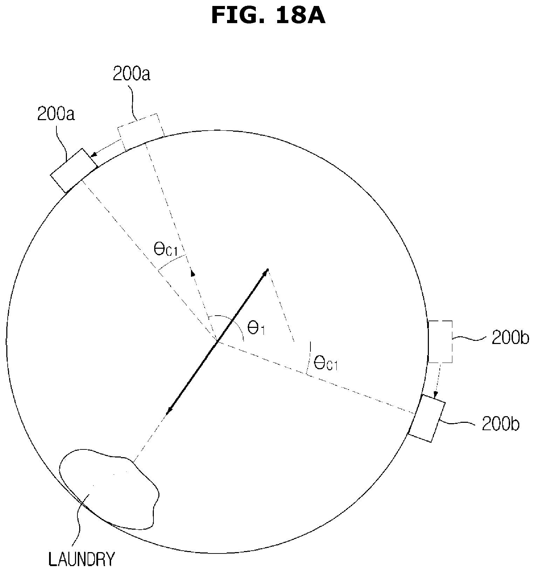

FIGS. 17A and 17B are flowcharts illustrating the spin-dry operation of the washing machine according to one embodiment, and FIGS. 18A to 18C are views illustrating examples of the water-removing compensating operation during the spin-dry operation of the washing machine according one embodiment.

Referring to FIGS. 17A to 18C, the washing machine 1 rotates the drum 30 at a balancing speed (approximately 400 rpm) during the spin-dry cycle (610).

While the drum 30 is rotated at the balancing speed, the washing machine 1 performs the first balancing operation (615). Since the balancing operation was described in FIGS. 12A to 15, the description thereof will be omitted. As a result of the first balancing operation, an angle between the first balancer 200a and the second balancer 200b with respect to the rotation axis of the drum 30, as shown in FIG. 18A, becomes the first balancing angle Θ1. At this time, the centrifugal force due to the laundry and the centrifugal force due to the first balancer 200a and the second balancer 200b are in equilibrium.

Subsequently, the washing machine 1 calculates a first compensation angle Θc1 based on the first balancing angle Θ1 (620). When the first compensation angle Θc1 is calculated based on the first balancing angle Θ1, a table pre-stored by a designer of the washing machine 1 may be used. As described above, the amount of removed water in the spin-dry operation may be changed depending on various factors such as the amount of the wet laundry, a material of the laundry, a rotation speed of the drum, etc. But, a factor that mainly affects the amount of the removed water is the amount of the wet laundry. Therefore, the amount of the removed water may be approximately estimated from the amount of the wet laundry, the amount of the wet laundry may be calculated from the balancing angle, and the compensation angle may be calculated from the amount of the removed water. In short, the compensation angle may be approximately estimated from the balancing angle. But, when the compensating operation is performed with the calculated compensation angle, large vibration is not generated when the drum 30 is rotated at low speed. But since balancing is not accurately performed when the drum 30 is rotated at a speed equal to or greater than 1000 rpm, the large vibration may be generated.

When the first compensation angle Θc1 is calculated, the washing machine 1 performs the first water-removing compensating operation (625). In the first water-removing compensating operation, as shown in FIG. 18A, the first balancer 200a and the second balancer 200b are moved by the first compensation angle Oc1 in a direction in which an angle between the first balancer 200a and the second balancer 200b is increased.

Subsequently, the washing machine 1 rotates the drum 30 at a first spin-dry speed (approximately 600 rpm) (630). That is, the washing machine 1 performs the first spin-dry operation during a predetermined first spin-dry time.

When the first spin-dry time elapses, the washing machine 1 rotates the drum 30 at the balancing speed (635).

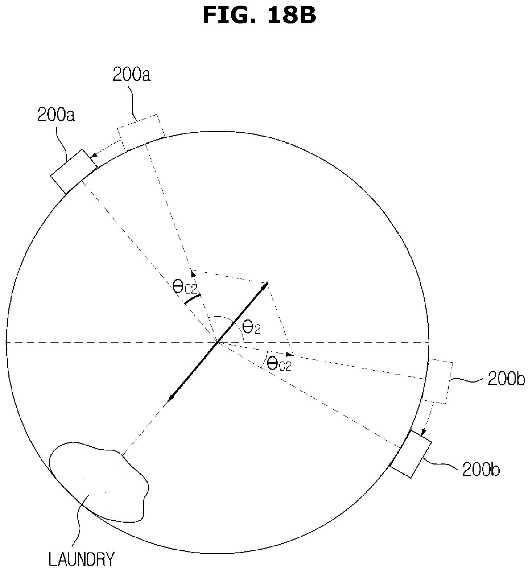

While the drum 30 is rotated at the balancing speed, the washing machine 1 performs the second balancing operation (640). As a result of the second balancing operation, the angle between the first balancer 200a and the second balancer 200b with respect to the rotation axis of the drum 30, as shown in FIG. 18B, becomes the second balancing angle Θ2. At this time, the centrifugal force due to the laundry and the centrifugal force due to the first balancer 200a and the second balancer 200b are in equilibrium.

Subsequently, the washing machine 1 calculates a second compensation angle Θc2 based on the first balancing angle Θ1 and the second balancing angle Θ2 (645). Specifically, the washing machine 1 calculates the first compensation angle Θc2 based on a difference between the first balancing angle Θ1 and the second balancing angle Θ2. As described above, the amount of the wet laundry may be estimated from the balancing angle. In other words, the washing machine 1 may estimate the amount of the wet laundry before the spin-dry based on the first balancing angle Θ1, and may estimate the amount of the wet laundry after the first spin-dry operation based on the second balancing angle Θ2. Therefore, the washing machine 1 may estimate the amount of the removed water when the drum 30 is rotated at the first spin-dry speed based on the difference between the first balancing angle Θ1 and the second balancing angle Θ2. Also, the compensation angle may be calculated from the amount of the removed water. Finally, the washing machine 1 may calculate the second compensation angle Θc2 in the drum 30 based on the difference between the first balancing angle Θ1 and the second balancing angle Θ2. However, since the second compensation angle Θ2 is calculated based on the amount of the removed water when the drum 30 is rotated at the first spin-dry speed, the second compensation angle Θc2 may be different from a compensation angle required when the drum 30 is rotated at the second spin-dry speed. But, as described above, since the drum 30 is rotated at the second spin-dry speed of 1000 rpm or less during the second spin-dry operation, the large vibration is not generated by a slight difference of the compensation angle.

When the second compensation angle Θc2 is calculated, the washing machine 1 performs the second water-removing compensating operation (650). In the second water-removing compensating operation, as illustrated in FIG. 18B, the first balancer 200a and the second balancer 200b are moved by the second compensation angle Θc2 in a direction in which the angle between the first balancer 200a and the second balancer 200b is increased.

Subsequently, the washing machine 1 rotates the drum 30 at the second spin-dry speed (approximately 850 rpm) (655). That is, the washing machine 1 performs the second spin-dry speed for a predetermined second spin-dry time.

When the second spin-dray time elapses, the washing machine 1 rotates the drum 30 at the balancing speed (660).

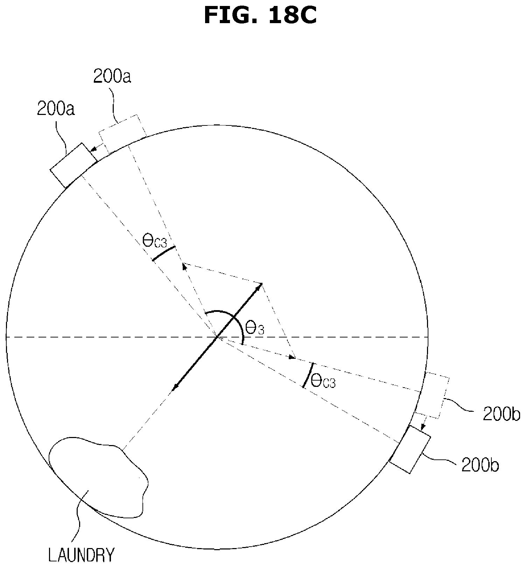

While the drum 30 is rotated at the balancing speed, the washing machine 1 performs a third balancing operation (665). As a result of the third balancing operation, the angle between the first balancer 200a and the second balancer 200b with respect to the rotation axis of the drum 30, as illustrated in FIG. 18C, becomes the third balancing angle Θ3. At this time, the centrifugal force due to the laundry and the centrifugal force due to the first balancer 200a and the second balancer 200b are in equilibrium.

Subsequently, the washing machine 1 calculates a third compensation angle Θc3 based on the first balancing angle Θ1, the second balancing angle Θ2, and the third balancing angle Θ3 (670). Specifically, the washing machine 1 calculates the third compensation angle Θc3 based on a difference between the first balancing angle Θ1 and the second balancing angle Θ2 and a difference between the second balancing angle Θ2 and the third balancing angle Θ3. In other words, the washing machine 1 estimates an amount of removed water at the third spin-dry speed based on the amount of the removed water at the first spin-dry speed and the amount of the removed water at the second spin-dry speed. For example, the washing machine 1 obtains a relation between the spin-dry speed and an amount of removed water based on the amount of the removed water at the first spin-dry speed and the amount of the removed water at the second spin-dry speed, and estimates the amount of the removed water at the third spin-dry speed by applying the obtained relation to the third spin-dry speed. Also, the washing machine 1 may calculate the third compensation angle Θc3 based on the estimated amount of removed water.

Subsequently, when the third compensation angle Θc3 is calculated, the washing machine 1 performs the third water-removing compensating operation (6675). In the third water-removing compensating operation, as shown in FIG. 18C, the first balancer 200a and the second balancer 200b are moved by the third compensation angle Θc3 in a direction in which the angle between the first balancer 200a and the second balancer 200b is increased.

Subsequently, the washing machine 1 rotates the drum 30 at the third spin-dry speed (approximately 1400 rpm) (680). That is, the washing machine 1 performs the third spin-dry operation for a predetermined third spin-dry time.

When the third spin-dry time elapses, the washing machine 1 stops the rotation of the drum 30 (685). At this time, the first balancer 200a and the second balancer 200b are moved to be positioned in opposite directions to each other with respect to the rotation axis of the drum 30.

In short, the washing machine 1 performs three spin-dry steps to compensate for the water-removing during spin-dry, and calculates the compensation angle in the third spin-dry step in which the drum 30 is rotated at the highest speed based on the amount of the water removed in the first spin-dry step and the second spin-dry step.

The embodiments of the disclosed present invention have been described, but the disclosed invention is not limited to the above-described specific embodiment. It is possible for those skilled in the art to make various variations within the scope of the invention, and the variations should not be individually understood from the disclosed invention.

## Claims

1. A washing machine (1), comprising:
a tub (20);
a drum (30) provided to be rotatable in the tub (20) to accommodate laundry;
a drive motor (40) rotating the drum (30);
a balancer housing (110) which is in a ring shape and coupled to the drum (30);
a balancer including at least two balancers (200) including a weight (270) offsetting an unbalanced load generated by the laundry during a spin-dry cycle and a moving unit (220) moving the weight, and provided to be movable in the balancer housing (110); and
a control unit (398) performing a balancing operation of moving the balancer (200) to a balancing position where the unbalanced load is offset,
**characterized in that** the control unit is configured to perform a compensating operation of moving the balancers (200) to a compensation position where a reduction of the unbalanced load is compensated for before rotating (630) the drum at a predetermined spin-dry speed.

2. The washing machine (1) of claim 1, wherein the control unit (398) rotates the drum (30) at a predetermined balancing speed and moves the at least two balancers (200a; 200b) to the balancing position.

3. The washing machine (1) of claim 2, wherein the control unit (398) calculates an angle (Θ) between the at least two balancers (200a; 200b) positioned at the balancing position and a compensation angle (Θ_{C}) which compensates for the reduction of the unbalanced load based on the angle (Θ) between the least two balancers (200a; 200b).

4. The washing machine (1) of claim 3, wherein the control unit (398) moves the at least two balancers (200a; 200b) so that the angle between the at least two balancers is increased by the compensation angle (Θ_{C}).

5. The washing machine (1) of claim 4, wherein the control unit (398) performs a spin-dry operation of rotating the drum (30) at a predetermined spin-dry speed.

6. A method of controlling a washing machine (1), including a tub (20), a drum (30) provided to be rotatable in the tub (20), a balancer including at least two balancers including a weight (270) offsetting an unbalanced load while rotating the drum (30) and a moving unit (220) moving the weight, the method comprising:
rotating (510; 610) the drum (30) at a predetermined balancing speed;
moving (520; 550; 615) the at least two balancers (200a; 200b) to a balancing position where the unbalanced load is offset;
**characterized by** moving (585; 625) the at least two balancers (200a; 200b) to a compensation position where a reduction of the unbalanced load during the rotation of the drum (30) is compensated for before
rotating (630) the drum at a predetermined spin-dry speed.

7. The method of claim 6, wherein the moving of the at least two balancers (200a; 200b) to the balancing position includes:
detecting (515) vibration of the tub (20);
moving (520; 550) the at least two balancers;
re-detecting (525) vibration of the tub (20); and
moving (535) the at least two balancers (200a; 200b) in a direction opposite a direction of the moving when the re-detected vibration is greater than the detected vibration.

8. The method of claim 7, wherein the moving of the at least two balancers (200a; 200b) includes moving the at least two balancers (200a; 200b) in the same direction (550).

9. The method of claim 7, wherein the moving of the at least two balancers (200a; 200b) includes moving the at least two balancers in different directions from each other (520).

10. The method of claim 6, wherein the moving of the at least two balancers (200a; 200b) to the compensation position includes:
calculating a compensation angle (Θ_{C}) for compensating for the reduction of the unbalanced load based on an angle (Θ) between the at least two balancers (200a; 200b) positioned at the balancing positions; and
moving the at least two balancers (200a; 200b) so that the angle between the at least two balancers (200a; 200b) is increased by the compensation angle (Θ_{C}).

## Patentansprüche

1. Waschmaschine (1), umfassend:
eine Wanne (20);
eine drehbar in der Wanne (20) bereitgestellte Trommel (30) zum Aufnehmen von Wäsche;
einen die Trommel (30) drehenden Antriebsmotor (40);
ein Auswuchtergehäuse (110), das eine Ringform aufweist und mit der Trommel (30) gekoppelt ist;
einen Auswuchter, der zumindest zwei Auswuchter (200) umfassend ein Gewicht (270), das eine durch die Wäsche während eines Trockenschleuderzyklus erzeugte unausgewuchtete Last ausgleicht, und eine Bewegungseinheit (220), die das Gewicht bewegt, umfasst und bewegbar im Auswuchtergehäuse (110) bereitgestellt ist; und
eine Steuerungseinheit (398), die einen Auswuchtvorgang des Bewegens des Auswuchters (200) in eine Auswuchtposition ausführt, in der die unausgewuchtete Last ausgeglichen ist,
**dadurch gekennzeichnet, dass** die Steuerungseinheit dazu gestaltet ist, einen Kompensationsvorgang des Bewegens der Auswuchter (200) in eine Kompensationsposition auszuführen, in der eine Verringerung der unausgewuchteten Last vor dem Drehen (630) der Trommel mit einer vorbestimmten Trockenschleudergeschwindigkeit kompensiert wird.

2. Waschmaschine (1) nach Anspruch 1,
wobei die Steuerungseinheit (398) die Trommel (30) mit einer vorbestimmten Auswuchtgeschwindigkeit dreht und die zumindest zwei Auswuchter (200a; 200b) in die Auswuchtposition bewegt.

3. Waschmaschine (1) nach Anspruch 2,
wobei die Steuerungseinheit (398) einen Winkel (θ) zwischen den in der Auswuchtposition positionierten zumindest zwei Auswuchtern (200a; 200b) berechnet und einen Kompensationswinkel (θ_{c}), der die Verringerung der unausgewuchteten Last kompensiert, basierend auf dem Winkel (θ) zwischen den zumindest zwei Auswuchtern (200a; 200b) berechnet.

4. Waschmaschine (1) nach Anspruch 3,
wobei die Steuerungseinheit (398) die zumindest zwei Auswuchter (200a; 200b) so bewegt, dass der Winkel zwischen den zumindest zwei Auswuchtern um den Kompensationswinkel (θ_{c}) vergrößert wird.

5. Waschmaschine (1) nach Anspruch 4,
wobei die Steuerungseinheit (398) einen Trockenschleudervorgang des Drehens der Trommel (30) mit einer vorbestimmten Trockenschleudergeschwindigkeit ausführt.

6. Verfahren zur Steuerung einer Waschmaschine (1) einschließlich einer Wanne (20), einer drehbar in der Wanne (20) bereitgestellten Trommel (30), eines Auswuchters, der zumindest zwei Auswuchter umfassend ein Gewicht (270), das während des Drehens der Trommel (30) eine unausgewuchtete Last ausgleicht, und eine Bewegungseinheit (220), die das Gewicht bewegt, umfasst, wobei das Verfahren umfasst:
Drehen (510; 610) der Trommel (30) mit einer vorbestimmten Auswuchtgeschwindigkeit;
Bewegen (520; 550; 615) der zumindest zwei Auswuchter (200a; 200b) in eine Auswuchtposition, wo die unausgewuchtete Last ausgeglichen ist;
**gekennzeichnet durch** Bewegen (585; 625) der zumindest zwei Auswuchter (200a; 200b) in eine Kompensationsposition, in der eine Verringerung der unausgewuchteten Last während der Drehung der Trommel (30) vor dem Drehen (630) der Trommel mit einer vorbestimmten Trockenschleudergeschwindigkeit kompensiert wird.

7. Verfahren nach Anspruch 6
wobei das Bewegen der zumindest zwei Auswuchter (200a; 200b) in die Auswuchtposition Folgendes einschließt:
Bestimmen (515) einer Schwingung der Wanne (20);
Bewegen (520; 550) der zumindest zwei Auswuchter;
Neubestimmen (525) einer Schwingung der Wanne (20); und
Bewegen (535) der zumindest zwei Auswuchter (200a; 200b) in eine zur Richtung des Bewegens entgegengesetzte Richtung, wenn die neubestimmte Schwingung größer als die bestimmte Schwingung ist.

8. Verfahren nach Anspruch 7,
wobei das Bewegen der zumindest zwei Auswuchter (200a; 200b) das Bewegen der zumindest zwei Auswuchter (200a; 200b) in dieselbe Richtung (550) einschließt.

9. Verfahren nach Anspruch 7,
wobei das Bewegen der zumindest zwei Auswuchter (200a; 200b) das Bewegen der zumindest zwei Auswuchter (200a; 200b) in zueinander unterschiedliche Richtungen (520) einschließt.

10. Verfahren nach Anspruch 6,
wobei das Bewegen der zumindest zwei Auswuchter (200a; 200b) in die Kompensationsposition einschließt:
Berechnen eines Kompensationswinkels (θc) zum Kompensieren der Verringerung der unausgewuchteten Last basierend auf einem Winkel (θ) zwischen den in den Auswuchtpositionen positionierten zumindest zwei Auswuchtern (200a; 200b); und
Bewegen der zumindest zwei Auswuchter (200a; 200b), sodass der Winkel zwischen den zumindest zwei Auswuchtern (200a; 200b) um den Kompensationswinkel (θ_{c}) vergrößert wird.

## Revendications

1. Machine à laver (1) comprenant :
une cuve (20) ;
un tambour (30) conçu pour pouvoir pivoter dans la cuve (20) pour accueillir du linge ;
un moteur d'entraînement (40) faisant pivoter le tambour (30) ;
un boîtier d'équilibrage (110) qui a une forme d'anneau et est couplé au tambour (30) ;
un équilibreur comprenant au moins deux équilibreurs (200) incluant un poids (270) décalant une charge non équilibrée générée par le linge pendant un cycle d'essorage et une unité de déplacement (220) déplaçant le poids, et conçu pour être mobile dans le boîtier d'équilibrage (110) ; et
une unité de commande (398) exécutant une opération d'équilibrage de déplacement de l'équilibreur (200) vers une position d'équilibrage où le poids non équilibré est décalé,
**caractérisée en ce que** l'unité de commande est configurée pour exécuter une opération de compensation par déplacement des équilibreurs (200) vers une position de compensation où une réduction de la charge non équilibrée est compensée avant de faire pivoter (630) le tambour à une vitesse d'essorage prédéterminée.

2. Machine à laver (1) selon la revendication 1,
l'unité de commande (398) faisant pivoter le tambour (30) à une vitesse d'équilibrage prédéterminée et déplaçant au moins deux équilibreurs (200a ; 200b) vers une position d'équilibrage.

3. Machine à laver (1) selon la revendication 2,
l'unité de commande (398) calculant un angle (θ) entre les au moins deux équilibreurs (200a ; 200b) positionnés à la position d'équilibrage et un angle de compensation (θ_{c}) qui compense la réduction de la charge non équilibrée sur la base de l'angle (θ) entre les au moins deux équilibreurs (200a ; 200b).

4. Machine à laver (1) selon la revendication 3,
l'unité de commande (398) déplaçant les au moins deux équilibreurs (200a ; 200b) de telle sorte que l'angle entre les au moins deux équilibreurs est augmenté par l'angle de compensation (θ_{c}).

5. Machine à laver (1) selon la revendication 4,
l'unité de commande (398) exécutant une opération d'essorage par rotation du tambour (30) à une vitesse d'essorage prédéterminée.

6. Procédé de commande d'une machine à laver (1), incluant une cuve (20), un tambour (30) conçu pour pouvoir pivoter dans la cuve (20), un équilibreur incluant au moins deux équilibreurs incluant un poids (270) décalant une charge non équilibrée tout en faisant pivoter le tambour (30) et une unité de déplacement (220) déplaçant le poids, le procédé comprenant :
faire pivoter le tambour (510 ; 610) à une vitesse d'équilibrage prédéterminée ;
déplacer (520 ; 550 ; 615) les au moins deux équilibreurs (200a ; 200b) vers une position d'équilibrage où le poids non équilibré est décalé ;
**caractérisé par** le déplacement (585 ; 625) des au moins deux équilibreurs (200a ; 200b) à une position de compensation où une réduction de la charge non équilibrée pendant la rotation du tambour (30) est compensée avant de faire pivoter (630) le tambour à une vitesse d'essorage prédéterminée.

7. Procédé selon la revendication 6,
le déplacement des au moins deux équilibreurs (200a ; 200b) à la position d'équilibrage incluant :
détecter (515) la vibration de la cuve (20) ;
déplacer (520 ; 550) les au moins deux équilibreurs ;
redétecter (525) la vibration de la cuve (20) ; et
déplacer (535) les au moins deux équilibreurs (200a ; 200b) dans une direction opposée à une direction du déplacement lorsque la vibration redétectée est plus élevée que la vibration détectée.

8. Procédé selon la revendication 7,
le déplacement des au moins deux équilibreurs (200a ; 200b) incluant déplacer les au moins deux équilibreurs (200a ; 200b) dans la même direction (550).

9. Procédé selon la revendication 7,
le déplacement des au moins deux équilibreurs (200a ; 200b) incluant déplacer les au moins deux équilibreurs dans des directions opposées l'une de l'autre (520).

10. Procédé selon la revendication 6,
le déplacement des au moins deux équilibreurs (200a ; 200b) à la position de compensation incluant :
calculer un angle de compensation (θ_{c}) pour compenser la réduction de la charge non équilibrée sur la base d'un angle (θ) entre les au moins deux équilibreurs (200a ; 200b) positionnés aux positions d'équilibrage ; et
déplacer les au moins deux équilibreurs (200a ; 200b) de telle sorte que l'angle entre les au moins deux équilibreurs (200a ; 200b) est augmenté de l'angle de compensation (θ_{c}).
